# EUROPÄISCHE PATENTSCHRIFT

(11) **EP 1 650 469 B1**
(45) Veröffentlichungstag und Bekanntmachung des Hinweises auf die Patenterteilung: **07.11.2007**
(21) Anmeldenummer: 05020750.5
(22) Anmeldetag: 23.09.2005
(51) Int. Cl.: F16F 9/54, B60G 13/00

(54) **Lager zur Befestigung und Lagerung einer Kolbenstange**
Support for connecting and suporting a piston rod
Support pour fixer et supporter une tige de piston

(30) Priorität: 19.10.2004 DE 102004051112
(43) Veröffentlichungstag der Anmeldung: 26.04.2006
(73) Patentinhaber: ZF FRIEDRICHSHAFEN AG, 88038 Friedrichshafen (DE)
(72) Erfinder: Schäfer, Christoph, 53489 Sinzig (DE); Schmitz, Michael, 53115 Bonn (DE)

(56) Entgegenhaltungen:
- DE-A1- 10 302 413
- US-A- 4 486 028
- US-B1- 6 394 436
- PATENT ABSTRACTS OF JAPAN Bd. 1996, Nr. 01, 31. Januar 1996 (1996-01-31) -& JP 07 233844 A (BRIDGESTONE CORP), 5. September 1995 (1995-09-05)

## Beschreibung

Die Erfindung betrifft ein Lager mit einem elastomeren Lagerkörper zur schwingungsisolierten Anbindung der Kolbenstange eines Stoßdämpfers bzw. eines, als Kolben-Zylinder-Aggregat ausgebildeten Schwingungsdämpfers oder Federbeins an der Karosserie eines Kraftfahrzeugs. Sie betrifft ein Lager, dessen Komponenten von einer topfförmigen Aufnahme umschlossen und mittels dieser Aufnahme an der Kraftfahrzeugkontur montiert werden. Zur Befestigung und Lagerung wird die Kolbenstange des Stoßdämpfers bis zu einem an ihr ausgebildeten Absatz in eine axiale Durchgangsöffnung des Lagers hinein geführt und mit der Fahrzeugkarosserie verbunden, wobei die Kolbenstange dazu vorzugsweise über ein als Tragstück wirkendes Innenteil des Lagers, welches komplett oder partiell von dem elastomeren Lagerkörper umschlossen ist, mit dem Lager verbunden wird.

Zur Lagerung von Stoßdämpfern dienende Lager bekannter Bauart bestehen aus einem tiefgezogenen Innenteil, an welches eine Gummikontur anvulkanisiert ist, einer ebenfalls als Tiefziehteil ausgebildeten Aufnahme, in welche das Innenteil mit dem anvulkanisierten Lagerkörper bzw. Gummipuffer eingepresst wird, sowie einer mit der Aufnahme verbindbaren Abschlussplatte. Durch eine formschlüssig, mittels Laschen erfolgende Verbindung zwischen der Aufnahme und der Abschlussplatte wird bei der Montage des Lagers an der Kraftfahrzeugkarosserie eine Abdichtung des Fahrzeuginneren gegen das Fahrzeugäußere sowie des Lagers gegen das Eindringen von Fett, Öl und Schmutz erreicht. Zwar wird mit einer derartigen Ausführungsform eine hinreichend gute Abdichtung erzielt, jedoch wird dabei eine Schwächung der Aufnahme durch erforderliche Ausnehmungen und durch so genannte, der Blechverbindung zwischen Aufnahme und Abschlussplatte dienende Verbindungspunkte in Kauf genommen. Dies hat sich jedoch als Nachteil für die Standfestigkeit der solchermaßen ausgebildeten Anordnungen erwiesen. Als weiterer Nachteil ist die Möglichkeit des Entstehens von Geräuschen zu nennen, welche durch ein geringfügiges Abheben der Aufnahme von der Abschlussplatte im Belastungsfall und das Anschlagen der sich bei der Entlastung wieder gegen die Abschlussplatte bewegenden Aufnahme resultieren. Durch die zur formschlüssigen Verbindung dienenden Laschen ist zudem ein vergleichsweise großer Bauraum für den Einbau der Lager erforderlich. Lager der beschriebenen Bauart besitzen außerdem ein vergleichsweise hohes Gewicht und sind verhältnismäßig teuer. In nachteiliger Weise arbeiten sie im Wesentlichen als reine Druckfeder.

Eine unter anderem hinsichtlich der vorgenannten Gesichtspunkte verbesserte Ausführungsform wird in der DE 103 02 413 A1 beschrieben. Die in der Schrift dargestellte Lösung kommt ohne eine Abschlussscheibe aus. Jedoch geht auch sie von einer Lagergeometrie aus, bei welcher der elastomere Lagerkörper an das Innenteil anvulkanisiert ist, so dass die Möglichkeit einer flexiblen Anpassung an unterschiedliche Einsatzzwecke bzw. Kennlinienanforderungen durch eine einfache Austauschbarkeit von Lagerkomponenten im Grunde nicht besteht.

Aufgabe der Erfindung ist es, ein gattungsgemäßes Lager so auszubilden, dass die genannten Nachteile des Standes der Technik vermieden werden, insbesondere jedoch eine hohe Lebensdauer für das Lager bei einem gleichzeitig einfachen Aufbau erreicht wird. Außerdem soll das Lager im hohen Maße schwingungsisolierend wirken und zuverlässig abgedichtet sein. Darüber hinaus soll die Lagergeometrie in Weiterbildung der Erfindung die Realisierung von Ausführungsformen ermöglichen, welche im Hinblick auf unterschiedliche Kennlinienanforderungen flexibel konfigurierbar sind.

Die Aufgabe wird durch ein Lager zur Befestigung und Lagerung einer Kolbenstange gelöst, welches durch die Merkmale des Hauptanspruchs charakterisiert ist. Vorteilhafte Ausbeziehungsweise Weiterbildungen der Erfindung sind durch die Unteransprüche gegeben.

Das insbesondere zur Lagerung eines Stoßdämpfers konzipierte, daher im Weiteren teilweise auch als Dämpferlager bezeichnete Lager besteht aus einem Innenteil, das eine Durchführung für das axiale Ende der Kolbenstange des Dämpfers aufweist, einem das Innenteil umgebenden elastomeren Lagerkörper und einem Außenteil, welches mit den vorgenannten Teilen in eine topfförmige Aufnahme eingepresst wird. Die genannte Aufnahme, welche ebenfalls eine Durchtrittsöffnung für die Kolbenstange aufweist, bildet ein Gehäuse mit einem Gehäuseboden für das Lager aus und dient zur Befestigung des von ihr aufgenommenen Lagers am vorgesehenen Einbauort, vorzugsweise einer Kraftfahrzeugkontur. Gemäß der Erfindung ist der, aus Gummi oder einem anderen Elastomer bestehende Lagerkörper des Lagers so ausgebildet, dass er auf seiner einen axialen Stirnseite, nämlich an der Seite, welche nach dem Einpressen des Lagers in das Gehäuse vom Gehäuseboden abgewandt ist, mindestens eine in axialer Richtung in den Lagerkörper hineinragende Nut aufweist. Die Nut erstreckt sich vorzugsweise umlaufend über den gesamten Umfang des Lagerkörpers, der somit im Bereich der Nut doppelwandig ausgebildet ist. Bei der Montage des Lagers wird das kappen- oder topfförmige, ebenfalls mit einer Durchtrittsöffnung für die Kolbenstange bzw. Mittel zu ihrer Befestigung versehene Außenteil mit seiner weit geöffneten Seite in die im elastomeren Lagerkörper ausgebildete Nut eingeführt. Vorzugsweise erfolgt dies durch Einpressen des Außenteils in den mit der Nut versehenen Lagerkörper. Das Außenteil wird soweit in die Nut eingeführt, dass ein die stirnseitige Öffnung der Nut umgebender, am Lagerkörper ausgebildeter Kragen das Außenteil in axialer Richtung überragt. Bei der Montage des zuvor in das Gehäuse eingepressten Lagers am Einbauort wird dieser Kragen an die mit der Durchtrittsöffnung versehene axiale Seite des Außenteils angedrückt, so dass er die entsprechende Stirnfläche des Außenteils, unter Ausbildung einer ringförmigen Dichtung für das Lager und Ausübung einer Vorspannung auf die inneren Bereiche des Lagerkörpers, teilweise überlappt.

In vorteilhafter Weise ermöglicht es die besondere geometrische Ausbildung des Puffers diesen als ein ausschließlich aus einem elastomeren Werkstoff bestehendes Teil auszuführen, welches nach der Montage und dem Einbau des Lagers am Einbauort gleichzeitig dämpfend und verspannend wirkt. Dabei wirkt der an dem Lagerkörper ausgebildete Kragen zusätzlich schwingungsisolierend. Durch die mittels des Kragens über das Außenteil auf die inneren Bereiche des Puffers aufgebrachte, sowohl in axialer als auch in radialer Richtung wirkende Vorspannung wird eine hohe radiale Steifigkeit erzielt. Hierdurch werden radiale Relativbewegungen bei langen Federwegen vermieden. Dabei bestehen trotz der möglichen langen axialen Federwege aufgrund des Lageraufbaus keine Haftungsprobleme zwischen den Lagerkomponenten.

Weiterhin ist das kappenförmige Außenteil durch das Einpressen in die Nuten des Lagerkörpers elastisch gelagert. Unter anderem auch unterstützt durch den Kragen des Lagerkörpers ergibt sich dabei eine bessere Lastverteilung, so dass das Außenteil aus Kunststoff ausgebildet werden kann, wodurch wiederum Korrosion vermieden und, in weiterer Folge dessen, die Realisierung einer, in ihrer genauen Ausbildung noch näher zu erläuternde Transportsicherung in Form einer einfachen Schnappsicherung ermöglicht wird. Zudem ist zur Abdichtung des Lagers keine Abschlussplatte erforderlich, was die Materialkosten senkt und wodurch eine mögliche Geräuschquelle vermieden wird. Eine wirkungsvolle Dichtung ist dennoch durch die am Lagerkörper in Form des Kragens integrierte Dichtung gewährleistet. Die in dem Lagerkörper ausgebildeten, auf der dem Gehäuseboden der Aufnahme zugewandten Seite geschlossenen Nuten des Lagerkörpers bilden eine Art elastomere Haut für die axiale Kante des in gleicher Richtung geöffneten kappen- bzw. topfförmigen Außenteils aus. Die Einordnung dieser Haut zwischen der Außenteilkante und dem Gehäuseboden wirkt dabei ebenfalls einer Geräuschbildung entgegen. Die genannten Vorteile gehen einher mit einem einfachen Aufbau des erfindungsgemäßen Lagers, welches zudem bei seiner Verbauung vergleichsweise wenig Bauraum benötigt.

Gemäß einer besonders vorteilhaften Ausbildungsform ist der Kragen des Lagerkörpers so ausgebildet, dass er vor der Montage des Lagers nach radial außen gerichtet ist und beim Einpressen des Außenteils in den elastomeren Lagerkörper in der Art eines Rollkragens nach innen klappt, wobei er das Außenteil auf seiner mit der Durchtrittsöffnung versehenen axialen Seite umfasst. Soweit ausgeführt wurde, dass in dem Lagerkörper mindestens eine Nut ausgebildet ist, meint dies, dass die Nut gegebenenfalls auch abschnittsweise unterbrochen ausgebildet sein kann, was im Grunde der Ausbildung mehrerer Nuten entspricht. Das in eine solche abschnittsweise unterbrochene Nut einzuführende oder einzupressende kappenförmige Außenteil muss dann auf seiner Mantelfläche mit den Unterbrechungen der Nut korrespondierende Ausnehmungen aufweisen. Bevorzugt ist jedoch eine Ausbildungsform, bei welcher die Nut in dem Lagerkörper bezogen auf dessen Umfangsrichtung vollständig umlaufend ausgebildet ist.

Weiterhin ist das Lager bevorzugt so ausgebildet, dass die Innenkontur des Lagerkörpers und die Außenkontur des Innenteils in der Weise aufeinander abgestimmt sind, dass das Innenteil bei der Montage des Lagers in den elastomeren Lagerkörper einschnappt und von diesem auch ohne haftende Ausbildung, das heißt ohne Vulkanisation, gehalten wird. Gerade bei dieser durch die grundsätzliche Gestaltung der Lagergeometrie ermöglichten Ausbildungsform ist in vorteilhafter Weise eine flexible Anpassbarkeit des Lagers an unterschiedliche Kennlinienanforderungen gegeben, da dieses durch Kombination von, insbesondere hinsichtlich ihrer Materialeigenschaften, unterschiedlichen Einzelteilen variabel konfigurierbar ist. Zudem ist hierdurch eine steifere radiale Kennlinie möglich. Weiterhin wird davon ausgegangen, dass ohne Haftung zwischen dem Innenteil und dem elastomeren Lagerkörper bessere Dauerlaufeigenschaften für das Lager erreicht werden könnten.

Bei einer vorteilhaften Weiterbildung des erfindungsgemäßen Lagers sind auf der Umfangsfläche des vorzugsweise rotationssymmetrischen Außenteils eine oder mehrere radial aufragende Schnappnasen ausgebildet. Gleichzeitig sind bei dieser Ausbildungsform, in entsprechender Anzahl, Ausnehmungen in der Umfangsfläche des Gehäuses vorgesehen, welche korrespondierend zu den Schnappnasen angeordnet und bemessen sind. Beim Einpressen des Lagers in das Gehäuse gelangen die Schnappnasen mit den Ausnehmungen des Gehäuses in Eingriff, wobei sie Teile der dünnen äußeren Wand des Lagerkörpers mit in die Ausnehmungen hineindrücken. Hierdurch wird eine Transportsicherung ausgebildet, die, in vorteilhafter Weise, bis zur Befestigung am Einbauort das Herausfallen des vormontierten Lagers aus dem Gehäuse verhindert. Das mit in die Ausnehmungen hineingezogene Elastomer bildet dabei in diesem Bereich gleichzeitig eine Dichtung aus und gleicht außerdem Toleranzen zwischen den Abmaßen der Schnappnasen und der Ausnehmungen wirkungsvoll aus. In Folge des Einrastens der Schnappnasen oder -haken wird, in vorteilhafter Weise, auf den Lagerkörper eine in axialer und radialer Richtung wirkende Vorspannung aufgebracht. Hierdurch wird eine größere radiale Steifigkeit erreicht. Außerdem wird ein großes Überstehen des Puffers aus der Aufnahme vermieden, wodurch sich die Endmontage einfacher gestaltet.

Eine weitere vorteilhafte Ausbildung des erfindungsgemäßen Lagers ist dadurch gegeben, dass der elastomere Lagerkörper bezogen auf die axiale Richtung aus zwei Komponenten gebildet ist, welche aus verschiedenen elastomeren Materialien mit unterschiedlichem Dämpfungsverhalten bestehen. Insbesondere kommt es dabei in Betracht, den Kragen aus einem anderen elastischen Material auszubilden als die sonstigen Teile des Lagerkörpers.

Das Außenteil ist, wie schon erwähnt, gemäß einer praxisgerechten Ausführungsform des Lagers als ein Kunststoffformteil ausgebildet. Dies ermöglicht eine Weiterbildung, bei der, an der dem Gehäuseboden abgewandten Stirnseite des Außenteils, ein Thermoplast angespritzt ist, welches eine zusätzliche Dichtung für das Lager ausbildet. Vorzugsweise weist das Außenteil zudem im Bereich der Durchtrittsöffnung Führungsmittel für die lagerichtige Montage der Lagerteile auf. Diese können beispielsweise in Form radial nach innen ragender oder axial aufragender Führungsstege ausgebildet sein.

Wie bereits betont, ermöglicht es die Gestaltung des erfindungsgemäßen Lagers auf eine Vulkanisation zur Verbindung von Innenteil und Lagerkörper zu verzichten. Dennoch ist selbstverständlich auch für das erfindungsgemäße Lager die Option gegeben, dieses im Bedarfsfall als gehaftete Variante, mit einem an das Innenteil anvulkanisierten Lagerkörper, auszubilden. Das Innenteil des Lagers ist bevorzugt rotationssymmetrisch ausgebildet, kann jedoch gegebenenfalls auch eine davon abweichende Form aufweisen.

Die Erfindung soll nachfolgend anhand eines Ausführungsbeispiels nochmals näher erläutert werden. In den zugehörigen Zeichnungen zeigen:
- Figur 1:: Eine Ausführungsform des erfindungsgemäßen Lagers in einer Explosivdarstellung
- Figur 2:: Das Lager gemäß Figur 1 im montierten und an der Kraftfahrzeugkarosserie verbauten Zustand

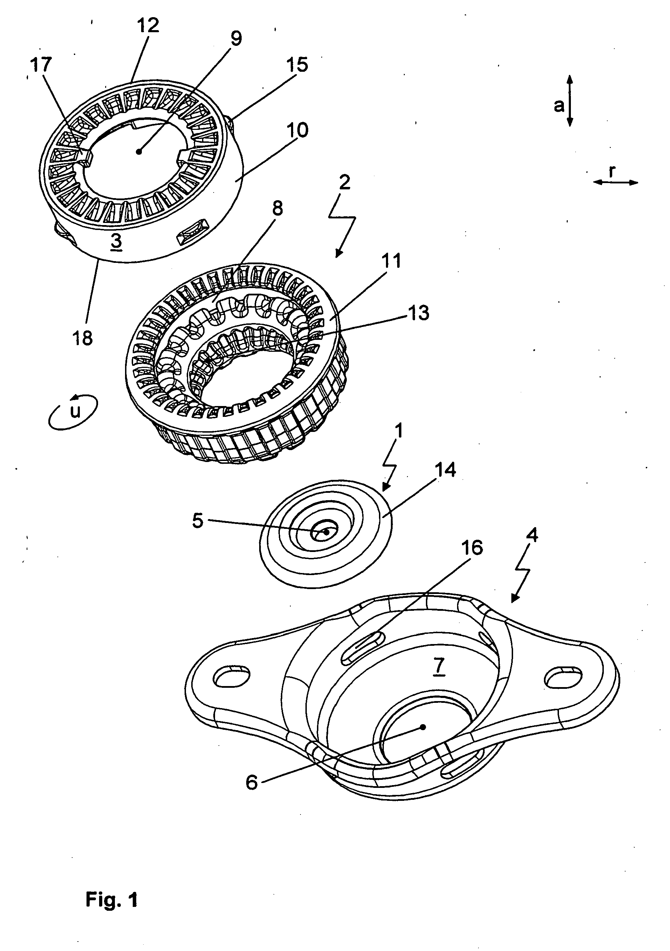

Die Figur 1 zeigt eine grundsätzliche Ausführungsform des erfindungsgemäßen Dämpferlagers. Durch die gewählte Explosivdarstellung sind die Komponenten des Lagers und deren spezielle Ausgestaltung gut zu erkennen. Das Lager besteht aus einem Innenteil 1, einem elastomeren Lagerkörper 2, 2', 2" und einem Außenteil 3 sowie einer als Tiefziehteil ausgebildeten Aufnahme 4, in welche die vorgenannten Teile bei der Montage eingepresst werden. Die Aufnahme 4 bildet ein Gehäuse mit einem Gehäuseboden 7 und einer Durchtrittsöffnung 6 aus und dient zur Montage des Lagers am Einbauort. Das Innenteil 1 und das Außenteil 3 weisen, ebenso wie das Gehäuse 4 axial verlaufende Durchführungen bzw. Durchtrittsöffnungen 5, 9 für die nicht dargestellte Kolbenstange eines Dämpfers bzw. für Mittel zur Befestigung der Kolbenstange auf.

Bei dem Innenteil 1 handelt es sich um ein flachzylindrisches beziehungsweise scheibenförmiges Element mit der Durchgangsöffnung 5 und einer speziell profilierten Außenkontur 14. An diese Außenkontur 14 ist die Innenkontur 13 des elastomeren Lagerkörpers 2, 2', 2" angepasst, so dass das Innenteil 1 nach dem Einführen in den Lagerkörper 2, 2', 2" an dessen Innenkontur 13 einschnappt und von dieser gehalten wird. Vorzugsweise ist das Innenteil 1 als Druckgussteil ausgebildet. Der Lagerkörper 2, 2', 2" besteht aus Gummi oder einem anderen elastomeren Werkstoff, wobei im Zusammenhang mit den weiteren Erläuterungen zum Ausführungsbeispiel von einer Ausbildung aus Gummi ausgegangen und der Lagerkörper 2, 2', 2" daher im Folgenden auch als Gummipuffer bezeichnet werden soll. Selbstverständlich liegt hierin jedoch keine Beschränkung des Erfindungsgegenstandes.

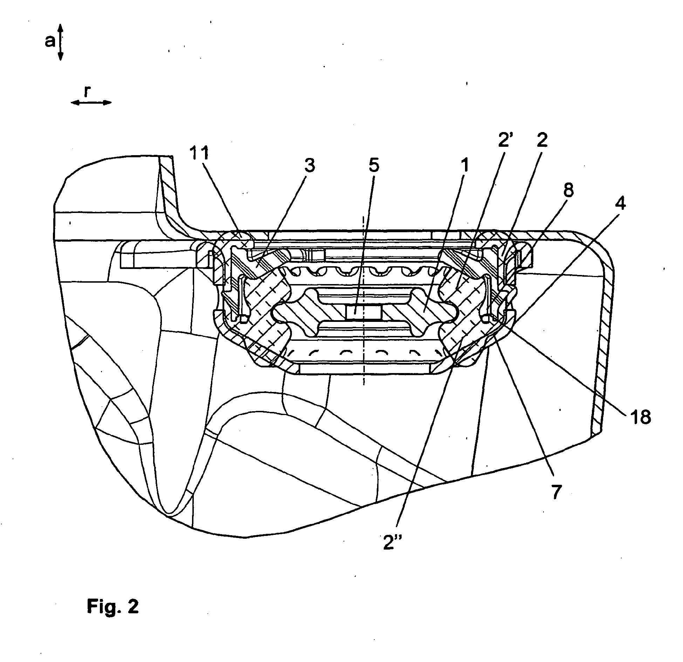

Das vorzugsweise aus Kunststoff bestehende hohlzylindrische Außenteil 3, an welchem zur Unterstützung des lagerichtigen Zusammenbaus Führungsmittel 17 in Form radial nach innen ragender Stege ausgebildet sind, wird mit seiner Außenwandung in eine in axialer Richtung a in den Gummipuffer 2, 2', 2" hineinragende Nut 8 eingeführt und in den Lagerkörper 2, 2', 2" eingeführt bzw. eingepresst. Die Nut 8 ist bei der in der Figur 1 dargestellten Ausbildungsform des Lagers, in bevorzugter Weise, bezogen auf die Umfangsrichtung u des Lagerkörpers, vollständig umlaufend ausgebildet. Dabei schlägt ein mit einem "Rollkragen" vergleichbarer Kragen 11 des Lagerkörpers bzw. Gummipuffers 2, 2', 2" um und umschließt teilweise die entsprechende axiale Stirnfläche 12 des Außenteils 3. Das in dieser Weise montierte Lager wird schließlich in das Gehäuse 4 eingepresst und mit diesem gemeinsam, wie in der Figur 2 erkennbar, an der Fahrzeugkontur unter Vorspannung montiert. Der Kragen 11 des Gummipuffers 2, welcher das Außenteil 3 an der Oberseite umschließt, wirkt dabei als Dichtung, zusätzliche Isolation und Toleranzausgleich. Der Kragen 11 übt in vorteilhafter Weise über das Außenteil 3 eine axiale und radiale Vorspannung auf die als elastomere Feder wirkenden inneren Bereiche 2, 2' des Lagerkörpers 2, 2', 2" aus. Hierdurch werden eine hohe radiale Steifigkeit erzielt und radiale Relativbewegungen bei großen axialen Federwegen vermieden. Der Boden der Nut 8, also ihre geschlossene Seite bildet zwischen der axialen Kante 18 des Außenteils 3 und dem Gehäuseboden 7 der Aufnahme 4 eine elastomere Schicht oder Haut, durch welche Laufgeräusche, wie sie beim Aufeinandertreffen der Kante 18 und des Gehäusebodens 7 entstehen könnten, vermieden werden.

Aus der Figur 2 ist erkennbar, dass auf der Umfangsaußenfläche des Außenteils 3 ausgebildete Nasen 15 (siehe hierzu Figur 1) in entsprechende Ausnehmungen 16 der Aufnahme bzw. des Gehäuses 4 einschnappen, wobei sie das das Außenteil 3 umgebende Material des elastomeren Lagerkörpers 2, welcher in diesem Bereich relativ dünnwandig ist, mit in die Ausnehmungen 16 des Gehäuses 4 hineindrücken. Somit ist auch in diesem Bereich eine Abdichtung gegeben. Durch das Einrasten der Schnappnasen 15 in die Ausnehmungen 16 wird bereits im vormontierten Zustand über das Außenteil eine in axialer und radialer Richtung wirkende Vorspannung auf den Lagerkörper aufgebracht. Vor der Montage an der Fahrzeugkontur ist zudem durch die in die Ausnehmungen 16 der Aufnahme 4 einschnappenden Nasen 15 eine Art Transportsicherung ausgebildet, welche ein Auseinanderfallen des Lagers bis zur Befestigung am Einbauort verhindert.

Die dargestellte und erläuterte Ausbildung des Dämpferlagers bewirkt, dass dessen Lagerkörper 2, 2', 2" gleichzeitig als Kennlinienfeder und als Verspannungsfeder wirkt. Sofern die Teile nicht haftend miteinander verbunden werden, was durch ihre Geometrie und Formgebung möglich ist, ist das Lager außerdem in vorteilhafter Weise sehr einfach an unterschiedliche Anforderungen für seinen Einsatz anpassbar. Dabei ermöglicht es der modulare Aufbau, Komponenten mit unterschiedlichen Materialeigenschaften, insbesondere auch unter Verwendung von elastomeren Lagerkörpern 2, 2', 2" unterschiedlicher Zusammensetzung, variabel miteinander zu kombinieren und somit vor allem das Kennlinienverhalten unterschiedlichen Erfordernissen anzupassen. Durch die kompakte Bauform wird für den Einbau des Lagers nur ein geringer Bauraum benötigt. Weiterhin ist es als sehr vorteilhaft anzusehen, dass das Lager aufgrund der entsprechenden Gestaltung seines Lagerkörpers 2, 2', 2" im Grunde eine integrierte Dichtung aufweist. Diese ist dadurch gegeben, dass der Kragen 11 das Außenteil 3 auf seiner dem Gehäuseboden 7 abgewandten Seite umfasst. Hierdurch ist eine Dichtung ausgebildet, welche eine Abschlussplatte entbehrlich macht, so dass die eingangs erläuterte, als nachteilig anzusehende potenzielle Geräuschquelle vermieden wird. Durch die spezielle Ausgestaltung der Lagerkomponenten und die Art ihres Ineinandergreifens ist außerdem eine zweifache Isolation, sowohl in axialer Richtung a, als auch in radialer Richtung r gegeben. Sofern auf eine haftende Verbindung der Teile, welche wie bereits erläutert durchaus entbehrlich ist, verzichtet wird, ist außerdem mit einer ohnehin gegenüber dem Stand der Technik bereits verbesserten Standfestigkeit beziehungsweise mit sehr guten Dauerlaufeigenschaften zu rechnen.

### Bezugszeichenliste

- 1: Innenteil
- 2: elastomerer Lagerkörper (beispielsweise Gummipuffer)
- 3: Außenteil
- 4: Aufnahme bzw. Gehäuse
- 5: Durchführung
- 6: Durchtrittsöffnung
- 7: Gehäuseboden
- 8: Nut
- 9: Durchtrittsöffnung
- 10: (Stirn-) Seite
- 11: Kragen
- 12: (Stirn-) Seite
- 13: Innenkontur
- 14: Außenkontur
- 15: Schnappnase
- 16: Ausnehmung
- 17: Führungsmittel (Steg)
- 18: axiale Kante

- r: radiale Richtung
- a: axiale Richtung
- u: Umfangsrichtung

## Patentansprüche

1. Lager zur Befestigung und Lagerung der Kolbenstange eines Kolben-Zylinder-Aggregats, insbesondere eines Stoßdämpfers, mit einem Innenteil (1), welches eine Durchführung (5) für das axiale Ende der Kolbenstange des Dämpfers aufweist, einem das Innenteil (1) umgebenden elastomeren Lagerkörper (2, 2', 2") und einem Außenteil (3), welches mit den vorgenannten Teilen in eine topfförmige, mit einer axialen Durchtrittsöffnung (6) für die Kolbenstange versehene Aufnahme (4) eingepresst wird, wobei die Aufnahme (4) ein Gehäuse mit einem Gehäuseboden (7) für das Lager bildet und zur Befestigung des von ihr aufgenommenen Lagers am vorgesehenen Einbauort ausgebildet ist, **dadurch gekennzeichnet, dass** an der, nach dem Einpressen des Lagers in das Gehäuse (4), vom Gehäuseboden (7) abgewandten axialen Stirnseite des elastomeren Lagerkörpers (2, 2', 2") mindestens eine in axialer Richtung (a) in den elastomeren Lagerkörper (2, 2', 2") hineinragende Nut (8) ausgebildet ist, in deren Bereich der elastomere Lagerkörper (2, 2', 2") doppelwandig ausgebildet ist und in welche das kappen- oder topfförmig ausgebildete, ebenfalls mit einer axialen Durchtrittsöffnung (9) versehene Außenteil (3) bei der Montage des Lagers mit seiner weit geöffneten Seite (10) eingeführt wird und dass der elastomere Lagerkörper (2, 2', 2") einen die stirnseitige Öffnung der Nut umgebenden Kragen (11) aufweist, der nach der Befestigung des in die Aufnahme (4) eingepressten Lagers am Einbauort das Außenteil (3) auf seiner mit der Durchtrittsöffnung (9) versehenen axialen Seite (12) teilweise überlappt, wobei er eine ringförmige Dichtung für das Lager ausbildet sowie über das Außenteil (3) eine Vorspannung auf die inneren Bereiche (2', 2") des Lagerkörpers (2, 2', 2") ausübt.

2. Lager nach Anspruch 1, **dadurch gekennzeichnet, dass** der Kragen (11) des elastomeren Lagerkörpers (2, 2', 2") vor der Montage des Lagers nach radial außen gerichtet ist und beim Einpressen des Außenteils (3) in den elastomeren Lagerkörper (2, 2', 2") in der Art eines Rollkragens nach innen klappt, so dass er das Außenteil (3) auf seiner mit der Durchtrittsöffnung (9) versehenen axialen Seite (12) umfasst.

3. Lager nach Anspruch 1 oder 2, **dadurch gekennzeichnet, dass** die Nut (8) in dem Lagerkörper (2, 2', 2") in der Umfangsrichtung (u) vollständig umlaufend ausgebildet ist.

4. Lager nach einem der Ansprüche 1 bis 3, **dadurch gekennzeichnet, dass** die Innenkontur (13) des elastomeren Lagerkörpers (2, 2', 2") und die Außenkontur (14) des Innenteils (1) in der Weise aufeinander abgestimmt sind, dass das Innenteil (1) bei der Montage des Lagers in den elastomeren Lagerkörper (2, 2', 2") einschnappt und von diesem gehalten wird.

5. Lager nach einem der Ansprüche 1 bis 4, **dadurch gekennzeichnet, dass** auf der Umfangsfläche des Außenteils (3) eine oder mehrere radial aufragende Schnappnasen (15) ausgebildet sind, welche beim Einpressen des Lagers in das Gehäuse (4), unter Ausbildung einer Transportsicherung, mit korrespondierenden Ausnehmungen (16) in der Umfangsfläche des Gehäuses (4) in Eingriff gelangen, wobei sie Teile der dünnen äußeren Wand des elastomeren Lagerkörpers (2, 2', 2") mit in die Ausnehmungen (16) hineindrücken, so dass das Elastomer im Bereich der Ausnehmungen (16) eine Dichtung und Toleranzüberbrückung ausbildet.

6. Lager nach einem der Ansprüche 1 bis 5, **dadurch gekennzeichnet, dass** der elastomere Lagerkörper (2, 2', 2") bezogen auf die axiale Richtung aus zwei Komponenten unterschiedlichen elastomeren Materials besteht.

7. Lager nach einem der Ansprüche 1 bis 6, **dadurch gekennzeichnet, dass** das Außenteil (3) als ein Kunststoffformteil ausgebildet ist.

8. Lager nach Anspruch 7, **dadurch gekennzeichnet, dass** auf der dem Gehäuseboden (7) abgewandten Stirnseite (12) des Außenteils (3) ein angespritztes Element aus einem Thermoplast angeordnet ist, welches eine zusätzliche Dichtung ausbildet.

9. Lager nach Anspruch 1 oder 8, **dadurch gekennzeichnet, dass** das Außenteil (3) im Bereich der Durchtrittsöffnung (9) Führungsmittel (17) zur lagerichtigen Montage der Lagerteile aufweist.

10. Lager nach einem Ansprüche 1 bis 9, **dadurch gekennzeichnet, dass** das Innenteil (1) und der elastomere Lagerkörper (2, 2', 2") durch Vulkanisation verbunden sind.

11. Lager nach Anspruch 1 oder 10, **dadurch gekennzeichnet, dass** das Innenteil rotationssymmetrisch ausgebildet ist.

## Claims

1. Bearing for fastening and supporting the piston rod of a piston-and-cylinder unit, in particular of a shock-absorber, said bearing having an inner part (1) which has a lead-through (5) for the axial end of the piston rod of the absorber, an elastomeric bearing body (2, 2', 2") which surrounds said inner part (1), and an outer part (3) which is pressed, with the aforementioned parts, into a pot-shaped receptacle (4) which is provided with an axial pass-through aperture (6) for the piston rod, wherein the receptacle (4) forms a housing with a housing bottom (7) for the bearing and is constructed for fastening the bearing it contains at the intended place of installation,
**characterised in that** there is constructed, on that axial end face of the elastomeric bearing body (2, 2', 2") which faces away from the bottom (7) of the housing after the bearing has been pressed into said housing (4), at least one groove (8) which extends into the elastomeric bearing body (2, 2', 2") in the axial direction (a), in the region of which groove said elastomeric bearing body (2, 2', 2") is of double-walled construction and into which groove the outer part (3), which is of cap-shaped or pot-shaped construction and which is likewise provided with an axial pass-through aperture (9), is introduced, by means of its widely open side (10), when the bearing is assembled, and that the elastomeric bearing body (2, 2', 2") has a collar (11) which surrounds the endface aperture of the groove and which, after the bearing which has been pressed into the receptacle (4) has been fastened at the place of installation, partially overlaps the outer part (3) on its axial side (12) which is provided with the pass-through aperture (9), under which circumstances said collar forms an annular seal for the bearing and also exerts pretensioning on the inner regions (2', 2") of the bearing body (2, 2', 2") via the outer part (3).

2. Bearing according to claim 1,
**characterised in that** the collar (11) of the elastomeric bearing body (2, 2', 2") is directed radially outwards before the bearing is assembled and folds inwards, after the fashion of a roll neck, when the outer part (3) is pressed into the elastomeric bearing body (2, 2', 2"), so that said collar encompasses the outer part (3) on its axial side (12) which is provided with the pass-through aperture (9).

3. Bearing according to claim 1 or 2,
**characterised in that** the groove (8) is constructed in the bearing body (2, 2', 2") so as to be fully circumferential in the peripheral direction (u).

4. Bearing according to one of claims 1 to 3,
**characterised in that** the inner contour (13) of the elastomeric bearing body (2, 2', 2") and the outer contour (14) of the inner part (1) are coordinated with one another in such a way that, when the bearing is assembled, the inner part (1) snaps into the elastomeric bearing body (2, 2', 2") and is held by the latter.

5. Bearing according to one of claims 1 to 4,
**characterised in that** there are constructed, on the peripheral face of the outer part (3), one or more radially protruding snap-in noses (15) which, when the bearing is pressed into the housing (4), come into engagement, forming a safety device for transport purposes, with corresponding clearances (16) in the peripheral face of the housing (4), in the course of which they press parts of the thin outer wall of the elastomeric bearing body (2, 2', 2") into the clearances (16) with them, so that the elastomer forms a seal and a tolerance-bridging arrangement in the region of said clearances (16).

6. Bearing according to one of claims 1 to 5,
**characterised in that** the elastomeric bearing body (2, 2', 2") consists, referred to the axial direction, of two components made of different elastomeric material.

7. Bearing according to one of claims 1 to 6,
**characterised in that** the outer part (3) is constructed as a plastic moulding.

8. Bearing according to claim 7,
**characterised in that** an element, which is injection-moulded on and consists of a thermoplastic and which forms an additional seal, is disposed on that end face (12) of the outer part (3) which faces away from the bottom (7) of the housing.

9. Bearing according to claim 1 or 8,
**characterised in that** the outer part (3) has, in the region of the pass-through aperture (9), guide means (17) for the positionally correct assembly of the parts of the bearing.

10. Bearing according to one of claims 1 to 9,
**characterised in that** the inner part (1) and the elastomeric bearing body (2, 2', 2") are connected by vulcanisation.

11. Bearing according to claim 1 or 10,
**characterised in that** the inner part is of rotationally symmetrical construction.

## Revendications

1. Palier servant à fixer et à loger la tige de piston d'un groupe piston-cylindre, notamment d'un amortisseur, avec une partie interne (1) qui présente un passage (5) pour l'extrémité axiale de la tige de piston de l'amortisseur, un corps de palier (2, 2', 2'') en élastomère entourant la partie interne (1) et une partie externe (3) qui est enfoncée avec les parties précitées dans un logement (4) en forme de coupelle, pourvu d'un orifice de passage (6) axial pour la tige de piston, le logement (4) formant un boîtier avec un fond de boîtier (7) pour le palier et étant conçu pour fixer le palier reçu par celui-ci sur le lieu d'installation prévu, **caractérisé en ce que** sur le côté frontal axial du corps de palier en élastomère (2, 2', 2'') opposé au fond du boîtier (7) après l'enfoncement du palier dans le boîtier (4) est conçue au moins une rainure (8) pénétrant dans le sens axial (a) dans le corps de palier en élastomère (2, 2', 2''), dans la zone de laquelle le corps de palier en élastomère (2, 2', 2'') est réalisé avec une double paroi et dans laquelle la partie externe (3) conçue en forme de cuvette ou de coupelle, pourvue également d'un orifice de passage (9) axial est introduite lors du montage du palier avec son côté (10) largement ouvert, et **en ce que** le corps de palier en élastomère (2, 2', 2'') présente un rebord (11) entourant l'ouverture de la rainure côté frontal qui recouvre partiellement après la fixation du palier enfoncé dans le logement (4) sur le lieu d'installation la partie externe (3) sur son côté axial (12) pourvu de l'orifice de passage (9), sachant qu'il forme une garniture annulaire pour le palier ainsi qu'exerce par le biais de la partie externe (3) une précontrainte sur les zones internes (2', 2") du corps de palier (2, 2', 2").

2. Palier selon la revendication 1, **caractérisé en ce que** le rebord (11) du corps de palier en élastomère (2, 2', 2'') est dirigé radialement vers l'extérieur avant le montage du palier et se rabat vers l'intérieur lors de l'enfoncement de la partie externe (3)dans le corps de palier en élastomère (2, 2', 2'') comme un rebord roulé de sorte qu'il entoure la partie externe (3) sur son côté axial (12) pourvu de l'orifice de passage (9).

3. Palier selon la revendication 1 ou 2, **caractérisé en ce que** la rainure (8) est conçue complètement de manière circulaire dans le corps de palier (2, 2', 2'') dans le sens circulaire (u).

4. Palier selon l'une quelconque des revendications 1 à 3, **caractérisé en ce que** le contour interne (13) du corps de palier en élastomère (2, 2', 2") et le contour externe (14) de la partie interne (1) sont adaptés l'un à l'autre de telle manière que la partie interne (1) s'encliquète lors du montage du palier dans le corps de palier en élastomère (2, 2', 2'') et soit maintenue par celui-ci.

5. Palier selon l'une quelconque des revendications 1 à 4, **caractérisé en ce que** sur la surface latérale de la partie externe (3) sont conçus un ou plusieurs nez encliquetables (15) dépassant radialement qui parviennent en prise lors de l'enfoncement du palier dans le boîtier (4), en formant une sécurité de transport, avec des évidements (16) correspondants dans la surface latérale du boîtier (4), sachant qu'ils pressent des parties de la mince paroi externe du corps de palier en élastomère (2, 2', 2'') dans les évidements (16) de sorte que l'élastomère forme dans la zone des évidements (16) une garniture et une compensation de tolérances.

6. Palier selon l'une quelconque des revendications 1 à 5, **caractérisé en ce que** le corps de palier en élastomère (2, 2', 2") par rapport au sens axial se compose de deux composants dotés de matériaux en élastomère différents.

7. Palier selon l'une quelconque des revendications 1 à 6, **caractérisé en ce que** la partie externe (3) est conçue comme une partie formée en matière synthétique.

8. Palier selon la revendication 7, **caractérisé en ce que** sur le côté frontal (12) de la partie externe (3) opposé au fond du boîtier (7) est disposé un élément injecté en une matière thermoplastique, lequel forme une garniture supplémentaire.

9. Palier selon la revendication 1 ou 8, **caractérisé en ce que** la partie externe (3) présente dans la zone de l'orifice de passage (9) des moyens de guidage (17) pour monter au bon emplacement les parties du palier.

10. Palier selon l'une quelconque des revendications 1 à 9, **caractérisé en ce que** la partie interne (1) et le corps de palier en élastomère (2, 2', 2' ') sont reliés par vulcanisation.

11. Palier selon la revendication 1 ou 10, **caractérisé en ce que** la partie interne (1) est conçue à symétrie de révolution.
